# EUROPEAN PATENT APPLICATION

(11) **EP 2 587 221 A2**
(43) Date of publication of application: **01.05.2013**
(21) Application number: 12190186.2
(22) Date of filing: 26.10.2012
(51) Int. Cl.: G01C 21/34, G06Q 10/08

(54) **Systems, methods and devices for generating alternate itineraries**

(30) Priority: 28.10.2011 US 201161552672 P
(71) Applicant: Van Moltke, Peter, Miami, FL 33134 (US); Grant, John, East Grinstead Sussex RH19 4TJ (GB); Mihajlovic, Nenad, Lincoln Lincolnshire LN1 3NE (GB)
(72) Inventor: Van Moltke, Peter, Miami, FL 33134 (US); Grant, John, East Grinstead Sussex RH19 4TJ (GB); Mihajlovic, Nenad, Lincoln Lincolnshire LN1 3NE (GB)
(74) Representative: Leach, James

(57) **Abstract**

Systems, methods and devices for generating one or more alternate itineraries for an entity for accommodation upon one or more disruptions of one or more predetermined itineraries for the entity for accommodation, each of the predetermined and alternate itineraries consisting of one or more segments, wherein the one or more segments of the predetermined itinerary are affected by the one or more disruptions and none of the one or more segments of the alternative itineraries are affected by the one or more disruptions, the system comprising a data storage component, configured to store information relating to segments and disruptions; and a data services component configured to (a) receive information relating to disruptions and segments; (b) communicate the information from (a) to the data storage component for storage of same; (c) determine whether predetermined itineraries will be affected by disruptions and, if so, generate alternative itineraries.

## Description

The present application claims the benefit of U.S. provisional application No. 61/552,672, filed October 28, 2011, which is herein incorporated by reference

### FIELD OF THE TECHNOLOGY

The present disclosure relates to systems, methods and devices for managing transportation, travel, shipping, and residence/storage requirements (i.e. accommodation) upon disruptions to predetermined itineraries.

### BACKGROUND OF THE TECHNOLOGY

Existing travel, shipment and storage data management systems are unable to appropriately and effectively react to and account for disruptions that impact existing itineraries. In part, this may be because known systems (a) do not account for all travel, shipment or storage options available to meet the requirements of the person, thing or entity that is being accommodated (i.e. transported or stored); and (b) there is no current ability to reflect developments or changes that occur in real-time or are not otherwise reflected in scheduled segment information. Other reasons that existing solutions are ineffective include the inability to process such data and an inability to easily communicate with consumers and providers of such data.

Existing systems are ineffective in finding alternative solutions when users face travel, shipment or storage disruption, in particular when alternate solutions could include air travel but also other methods of transportation such as rail, bus, car hire, and hotel or storage information, and are generally limited to passenger data. Moreover, the ability to assess cargo information in similar ways so that freight customers may consider alternative solutions in view of disruptions is not found in prior solutions.

Communication of information, or lack thereof, is a primary issue at times of disruption and it leads to confusion for travelers or shippers. Timely, up to date information is vital during any disruption. Options are important, passengers and/or shippers can display amazing creativity and flexibility when they urgently need to get somewhere. Whilst issues such as air space management and operating criteria are being refined, communication to or from the passenger and/or shipper remains an area that lacks sufficient support.

Examples of travel disruption could include an airport closing (maybe due to terrorism or local strike action); an airline may suspend services due to operational reasons or there may be disruptions to air space due to weather conditions. It may also include a heightened risk of closure or cancellation of a currently available segment. It may also include the existence of new options that, if known when the original or predetermined itinerary had been devised, would be preferable or more desirable. Disruptions may also include any such disruptions that have been initiated or caused by the traveler or customer who has an interest in the entity for transport or other accommodation (e.g. shipping company, travel department of a large corporation, etc.). While existing solutions may account for single or a few number of modes of segment, in respect of a certain limited number of types of disruptions, there is no solution available that provides for any type of disruption across multiple segment modes.

### SUMMARY OF THE TECHNOLOGY

The present disclosure is directed to systems, methods and devices for generating alternate itineraries for an entity for accommodation for transport/storage/residence upon the occurrence of one or more disruptions.

There are provided herein systems, methods and devices for generating alternate itineraries for an entity for accommodation upon a disruption of a predetermined itinerary, wherein the predetermined and alternate itineraries comprise of one or more segments that accommodate the entity during transport and/or storage from an originating location and/or time to a final location and/or time, and wherein the segments comprise of any of a plurality of modes of accommodation (i.e. storage or transport). Embodiments of the instantly disclosed subject matter comprise a data storage component configured to store segment information, disruption information, optionally predetermined itinerary information, and optionally information relating to the entity for accommodation and users of the system associated with the entity for accommodation. The data storage component is in operative communication or communicatively coupled to a data services component, which is configured to, *inter alia*:
a. Continually or regularly obtain segment information from segment data sources as it changes (i.e. schedules and associated costs of methods of accommodation from external data suppliers and the existence of disruptions of any segment), and cause the storage of same in the data storage component;
b. In the event of a disruption that affects any one or more of the segments in the pre-existing itinerary, generate the alternate itinerary comprising a set of one or more segments for which the disruption is reduced and, optionally, meet one or more other predetermined accommodation requirements; and
c. Optionally, arrange for booking all of the segments of the alternate itineraries using a booking resource that is part of the data services component, or is otherwise communicatively coupled thereto.

Optionally, there is also provided a data access component in operative communication or communicatively coupled to one or both of the data storage component and the data services component for obtaining and/or receiving and/or managing the alternate itinerary.

In one embodiment, there is provided a system wherein a user can communicate with the data storage component via a computing device such as an end-user computer or a handheld device, which, in some embodiments, may use an executable or application thereon or a web browser or similar, to communicate via a communication medium, such as the internet, by sending a predetermined itinerary comprising of one or more segments, one or more of which have been disrupted, and receiving from the data storage component an alternate itinerary comprising of one or more segments that are not disrupted or for which the effect of the disruption is reduced or is moot.

In some embodiments, one or more predetermined itineraries are stored on the data storage component and corresponding alternate itineraries are generated and communicated to the data access component upon disruption of any one or more segments in the predetermined itinerary.

In some embodiments, the data services and data storage components may be accessed directly by the servers of a third-party service as part of or separate from the systems and methods of the instantly disclosed subject matter. Such embodiments can facilitate the use of the subject matter of the instantly disclosed subject matter by, for example, a third-party travel services company or shipping services company. For example, upon the third-party service notifying the data services component and/or the data storage component of a disruption (or vice versa), alternate itineraries could be generated for all affected clients of the third-party service and, optionally, the alternate itinerary could be automatically booked by the third-party service for a fee. Alternatively, the system could communicate such alternative to the user data access component directly, optionally accompanied by an offer to book all segments of the alternate itinerary for a fee.

In some embodiments, the disruption can be a user-derived change in circumstances, such as a change in travel plans or requirements. The location of the entity for accommodation, as determined in real-time by a global positioning system in operative communication or communicatively coupled to the data access component, may constitute the disruption in cases where the data services component determines that the predetermined itinerary becomes less desirable, in terms of cost, travel time, access to desirable segment modes or destinations (final or intermediate) than would a generated alternate itinerary based on the current location of the entity and the stored segment information.

The system, methods and devices may be implemented on a web-services platform. Any or all of the devices of the instantly disclosed subject matter can be cloud-based devices, virtual servers, or stand-alone servers. In one embodiment, the system comprises of a private-cloud, made private by a firewall for security, within which resides the data storage component as one or more databases (which can be cloud-based, virtual, or a stand-alone device or group of devices) and the data services component provided by a processor or server (again, which may be cloud-based, virtual or a stand-alone device or group of devices). The data access component may comprise of user device such as a computer having a web browser (configured to access the system via a web-applications server), a personal communications device, an executable running on a PDA, computer or other computing device, tunneling directly to the data services component across a network, any device for receiving and sending email, or back-office segment to, for example, an enterprise server or network (e.g. using XML communication protocols). In some embodiments, the data services component, data storage component and data access components are part of an enterprise solution and a combination of the three elements reside within the internal network of a given entity.

The system may allow travelers and travel arrangers to alter their travel plans by ensuring they have access to the most up to date information for alternative routes of travel. Often at times of disruption, travelers rely on multiple fragmented sources of information (usually provided by the airline they are flying with) but embodiments of the instantly disclosed subject matter can consolidate travel alternatives into a form that allows the end user to make new arrangements given the most recent and comprehensive data available.

In embodiments, there is provided a system for generating one or more alternate itineraries for an entity for accommodation, the system comprising: a) a data storage component configured to store information, said information relating to: one or more segments, one or more disruptions, one or more accommodation requirements, one or more predetermined itineraries, said one or more alternate itineraries, or any combination thereof; and b) a data services component in operative communication with said data storage component, said data services component configured to receive or transmit said information and process said information to generate said one or more alternate itineraries if the one or more disruptions affect the one or more segments of the one or more predetermined itineraries.

In embodiments, there is also provided a method of generating one or more alternate itineraries for an entity for accommodation, the method comprising the steps of: a) receiving information, said information relating to: one or more segments, one or more disruptions, one or more accommodation requirements, one or more predetermined itineraries, said one or more alternate itineraries, or any combination thereof; b) storing said information in a data storage component; and c) generating said one or more alternate itineraries if the one or more disruptions affect the one or more segments of the one or more predetermined itineraries.

In embodiments, there is also provided a computer program product for generating one or more alternate itineraries for an entity for accommodation, the computer program product comprising code which, when loaded into memory and executed on one or more processors, is adapted to perform the steps of: a) receiving information, said information relating to: one or more segments, one or more disruptions, one or more accommodation requirements, one or more predetermined itineraries, said one or more alternate itineraries, or any combination thereof; b) storing said information in a data storage component; and c) generating said one or more alternate itineraries if the one or more disruptions affect the one or more segments of the one or more predetermined itineraries.

An example of the use of the instantly disclosed subject matter could allow a passenger who cannot fly from Copenhagen to Paris as scheduled at a given time because air Traffic Control in France are on strike. The traveler must get home for an important event tomorrow. The airline on which he is booked can only offer an alternative flight in 3 days time which means he is effectively stranded. Another airline has a flight to London from Copenhagen that leaves in 2 hours time (and is currently estimated to depart on time), and there is a Eurostar train from London to Paris that leaves 2 hours after this flight arrives. The passenger can use the systems, methods and devices of the instantly disclosed subject matter to generate this option (by searching for alternative ways to get from Copenhagen to Paris) and therefore can get home via this (or other) alternative routes.

The systems and methods disclosed herein are capable of providing up-to-date information to passengers, thereby improving service levels and allowing airports to focus on operational issues, avoiding passengers coming to the airport despite contrary advice. The systems and methods disclosed herein are also capable of: providing direct portals to an online travel agency that can allow passengers to re-book and offers further revenue generation opportunities; being hosted on airport, partner or media sites during disruption incidents; and/or being used on 'dumb' terminal screens during a crisis.

The examples and objectives described above are included solely to advance the understanding of the subject matter described herein and are not intended in any way to limit the present disclosure to embodiments that are in accordance with the examples or improvements described above.

### BRIEF DESCRIPTION OF THE FIGURES

The present disclosure, both as to its arrangement and method of operation, together with further aspects and advantages thereof, as would be understood by a person skilled in the art of the instantly disclosed subject matter, may be best understood by reference to the accompanying schematic and graphical representations in light of the detailed description thereinafter:

**Figure** 1 is a high level representation of the architecture of one embodiment of the instantly disclosed subject matter.

**Figure** 2 is a graphic representation of an exemplary embodiment of a system of the instantly disclosed subject matter.

**Figure** 3 is a block diagram of one embodiment of a method of the instantly disclosed subject matter.

**Figure** 4 is a block diagram of one embodiment of a method of the instantly disclosed subject matter.

**Figure** 5 is a block diagram of one embodiment of a method of the instantly disclosed subject matter.

**Figure** 6 is a graphic representation of an exemplary embodiment of a system of the instantly disclosed subject matter.

**Figures** 7 to 16 show various screen shots, in embodiments, of the instantly disclosed subject matter.

### DETAILED DESCRIPTION OF THE TECHNOLOGY

The present disclosure will now be described more fully with reference to the accompanying schematic and graphical representations in which representative embodiments of the subject matter disclosed herein are shown. The present disclosure may however be embodied and applied and used in different forms and should not be construed as being limited to the embodiments set forth herein. Rather, these embodiments are provided so that the true scope of the present disclosure would be understood by those skilled in the art.

An "entity for accommodation" is any object, thing, person, animal, cargo, group thereof, or combination thereof that is to be accommodated in being stored and/or transported from an originating point in time and/or, optionally, from originating location, to a destination point in time and/or, optionally, a destination location. It may refer to a person who is leaving from an originating location at a given time or day to a destination location at a given time or day, and optionally requiring a hotel for a stop-over during the travel and/or ground or water travel as segments. It may refer to an object, cargo, or group of objects or cargo, that must be transported and/or stored during a hold-over or stop-over during the transportation. Or it may refer to storage of an item, object, cargo, animal or person, with or without any requirement for travel. There may be additional requirements for transport and storage, including fare rules, atmospheric conditions (e.g. temperature, humidity, atmospheric pressure, etc.), that must be provided for during each segment.

An "itinerary" is schedule information comprising information relating to the one or more segments and, optionally, information relating to characteristics for each segment that may be required to meet one or more predetermined accommodation requirements of an entity for accommodation. It may refer to a flight booking schedule, possibly including a hotel booking for a stop-over mid-travel with rental car booking information providing for travel to and from airports. It may also include storage information for a cargo shipment from a first day to a last day (i.e. a single segment that does not consist of any travel/transportation). A predetermined itinerary is an itinerary that existed or was booked prior to a disruption or knowledge of a disruption. An alternate itinerary is an itinerary that was generated by the instantly disclosed subject matter after it determines the existence of a disruption, which may or not be booked or otherwise accepted by the entity for accommodation.

A "segment" is any mode of transportation or storage that may be necessary for accommodating an entity for accommodation during storage or transport between the originating time and/or location and the destination time and/or location. It may refer to various modes of accommodation for an entity for accommodation that is specific to transportation, including but not limited to, flights, trains, metro, buses, shuttles, ferries, ships, trucks, taxis, or any other type of transportation. It may also include any mode of accommodation that is specific to storage and/or residence, either during transport or independently of any transportation, including, without limitation, hotel stays, residences, storage facilities or locations, and depots. These are non-exhaustive lists and could include any mode of transport or storage necessary or desirable in accommodating an entity from an originating location and/or time to a final or interim location and/or time. It may also include other related information such as availability and cost, as well as other associated information, which may or may not be related to accommodation requirements, such as existence of or options for temperature/humidity control, first class/coach or other fare rules, window seats, bed size, etc. These and any other options or characteristics of a segment that can be compared by a user or the instantly disclosed systems and devices to the preferences of said user or the entity for accommodation, if different, as a particular itinerary can be disrupted by the discovery or existence of an alternative itinerary that is more suited to match some or all of the user's or entity's preferences.

A "disruption" may refer to any event or condition that has an impact on the availability or desirability of any segment as it may apply to an entity for accommodation, or a user/customer of the system if the entity and the user are not the same. It may refer to any event or circumstance that may cause one or more segments or other aspects of an itinerary (including any aspect or service offering relating to the transportation or storage/residence of the entity for accommodation) to become generally unavailable or less desirable, and may include events or conditions that cause a condition to become, without limitation, cancelled, inoperative, impossible, improbable, less desirable, less practical, more risky, or more expensive. For example, with respect to air travel, it may include a flight cancellation for any reason, the closing of an airport or the closing of airspace, or an increase in cancellations or delays at a given airport above a predetermined threshold. It can also apply to any disruptions of other forms of transportation or residence/storage. Risk of a disruption is also considered to be a disruption for the purposes of this disclosure. Delay can be considered a disruption, and because some forms of delay the exact amount of delay time can be difficult, if not impossible, to determine ahead of time, a disruption may also include a risk of delay. Such a risk of delay can include possible or suspected: traffic congestion, road work, customs or security delays, train or metro line work or construction, predicted or actual weather systems, or a combination thereof. Moreover, a disruption may include for the purposes of this disclosure a change in the in the schedule or capabilities of any segment in the predetermined itinerary or the schedule of any other applicable travel/storage/residence availability that result in alternate itineraries becoming more desirable in terms of cost, time, inclusion of a particular stop-over or travel mode, or available options or ability to meet a predetermined accommodation requirement. A disruption can also be considered to include traveler- or user-induced changes, such as the traveler's current location or a change in travel requirements (i.e. they will miss a flight on a particular leg of a trip because, since establishing the predetermined itinerary, some change has resulted in a requirement or desire for staying at a particular location longer than originally planned or an additional location must be added to the itinerary).

The term "accommodation" is intended to encompass, both collectively and individually, transportation, storage, residence time of an entity during a particular time period, in transporting the entity from one place to another, or storage of the entity, or a combination thereof. It may include the storage of an item, animal or person between stages of transportation, or just the storage of the animal, item or person between two points in time. The instantly disclosed subject matter, in some embodiments, facilitates any or all accommodations of an entity required when (a) transporting that entity from a first or interim location to a final or another interim location; (b) storing or providing a residence for the entity between a first or interim time and a final or another interim location; or (c) both. It may also include the capacity of a segment to meet the accommodation requirements of an entity for accommodation.

The term "accommodation requirement" refers to a condition, characteristic or option of a segment or a service provided on a segment as may be required for, determined by, or inferred in respect of, an entity for accommodation. Alternatively, it may refer to the requirement or preference of an entity for accommodation or associated customer (if different). By way of example, a segment that is a flight may include multiple meal, food or drink options; number of legs within the flight, fare class (e.g. first class, business class, coach, etc.), seating designation, differing luggage rules, movies, etc. A segment that is a storage facility may have accommodation requirements associated with it relating to storage temperature and humidity, light levels, security, customs bonding facilities, etc. As another example, an entity for accommodation that is a traveler may have the following accommodation requirements: boarding assistance, meal options (due to dietary restrictions), budgetary constraints, requirement to stop-over at a pre-determined connection location for a predetermined amount of time, or to avoid a particular jurisdiction. An entity for accommodation that is a shipment of cargo may have accommodation requirements that include an overall trip time limit and/or limits on ambient temperature (due to its perishable nature, for example), avoidance of certain jurisdictions (due to export/import regulations), and/or customs requirements.

The instantly disclosed subject matter consists of methods, processes, systems and devices for real-time management of change or disruption to predetermined itineraries by providing alternate itineraries that utilize all possible means of transportation and/or residence and/or storage between portions of the itinerary. Alternate itineraries are built by determining one or more segments necessary for accommodating (i.e. transporting and/or storing) persons, things, animals, items, or combinations thereof from an initial location to a final location and/or from an initial time to a final time. A segment can include any method of transportation, type of accommodation or storage as may be necessary, including customs or security clearance steps or locations or the like.

In some embodiments, there is provided a means for determining an alternate itinerary when a predetermined itinerary has been disrupted such that one or more portions of the predetermined itinerary is rendered unavailable, unable to meet the requirements of the traveler, or upon the existence of an alternate itinerary that improves some aspect of the itinerary for the traveler or transported good.

The system can be accessible by multiple data access means including personal communication device, such as a PDA, web browser, other device having an executable stored thereon, or dedicated device. It can be accessed via the internet or other communication networks, using various application layer protocols, including, without limitation, HTTP, FTP, IRC, IMPPpre/IMPPmes, POP3, RTSP, S-HTTP, SMTP, SNMP, SOCKS, SOAP, webservices, or TELNET. As such, a user can access the system to obtain, or be notified of, alternate itineraries which may be required by an end user, or alternatively by a provider of travel or shipment and/or storage services, as a result of a disruption to the predetermined itinerary. The system may be connected to a network, in some embodiments the Internet World Wide Web. Although the Internet has been shown as a single entity in the attached Figures, it should be understood that the Internet is actually a conglomeration of computer networks and is a constantly evolving and changing structure. The systems disclosed herein therefore are not limited to the current structure or form of the Internet but encompasses any future changes or additions to the Internet. Further, the system may be directly connected to the Internet, such as through its own node or portal. The system, however, may be practiced with any suitable segment to the Internet or other communications network, portal or media, such as through an intermediate Internet access provider or direct communications pathway or tunnel. The instantly disclosed subject matter provides for any number of different modes of travel, shipment, storage/residence, or a combination thereof, which may be collectively referred to herein as accommodation. There is provided a database or other data storage media, in a data storage component, that is updated in real-time and contains, among other information, segment information relating to travel, shipment and storage/residence information accounting for all aspects of accommodation from one location and/or time to another location and/or time, including, without limitation, hotels or storage facilities, taxi, bus, rail, metro and train schedules, airline and airport schedules, sea or water shipment schedules (including ferries and cargo ships), availability of storage facilities, and hotels. The data storage component may also include data regarding disruptions to segments, including customs or security delays, traffic obstructions, weather patterns, increase in number or percentage of cancellations in an airport (either by rate of increase or from reaching a threshold value), rail-station or the like, and suspected or actual terrorist or other security-threatening activities. The data storage component is, in some embodiments updated in real-time (i.e. updated to reflect events as they occur or as they have occurred shortly before) by utilizing data access services to information made available by the providers of such travel services or related information. As such, the data storage component provides for "planned" accommodation information (i.e. scheduled) as well as "actual" accommodation information (i.e. real-time changes to scheduled travel data, or data not reflected in scheduled data, such as the time when a flight backs away from or arrives at a gate, taxiing time, and actual lift-off or landing times). In some embodiments, there is provided the use of a probabilistic algorithm that determines probabilities of disruption occurring in respect of a given segment or segments in itineraries, and then compares such a determination to similar probabilities in segments that could be used to build alternate itineraries and when the probabilities for the alternate itinerary demonstrate a probability of improvement or of disruption reduction over the pre-existing itinerary above some pre-determined or calculated threshold, a disruption is indicated and the one or more alternate itineraries are created for the entity for accommodation in question. A probabilistic assessment of alternate itineraries can also be used to rank generated alternate itineraries by, for example, by ranking those alternate itineraries with a higher likelihood of (a) containing segments that will not be impacted by disruptions, (b) contain segments with a higher likelihood of providing desired accommodation requirements, or (c) comprising of segments with a higher likelihood of remaining available.

In some embodiments, the Data Services Component is configured to mine the Data Storage Component to look for potential risk factors for disruption. This could include any data associated with the provision of any segment or a combination of data associated with a segment or segments. For example, a certain pilot may be assigned to fly a plane associated with a segment, and that pilot, as determined by mining the Data Storage Component, has a history of arriving on average 30 minutes late when flying YYZ -> JFK. This could be identified as a potential disruption that alternate itineraries could be assessed in this regard. In general, this data mining application may be utilized to assess all data in the data storage component to attempt to correlate data associated with possible disruptions or risks of possible disruptions. As such, information is available in the data storage component that can provide for generation of alternate itineraries that may account for virtually any type of disruption, from the minor (i.e. a cancelled flight or a traffic jam) to the catastrophic (i.e. shut-down of airspace over large geographic areas and many important airports due to terrorist activity or volcanic activity).

By virtue of the comprehensive and constantly-updated source of information, the instantly disclosed subject matter may, for example, provide for the creation of alternate itineraries that were previously unconsidered because there was insufficient information available about alternative routes, modes of travel and/or residence/storage. The system of the present disclosure may be configured to consider routes that significantly deviate from custom or habitual travel routes, which would ordinarily be considered overly impractical for travelers (or other entities for accommodation) but for the circumstances caused by a particular disruption. For example, it would ordinarily be overly impractical, and thus not considerable, for a traveler in Europe to plan a travel route from Great Britain via train to Madrid, Spain, with a hotel stay and ground transportation to a Madrid airport, flight from Madrid to Buenos Aires, Argentina, ground transportation to another airport in Buenos Aires, flight from Buenos Aires to Miami, Florida, flight from Miami to New York. Such a trip would normally be inappropriate for a business traveler, unless all northern trans-Atlantic flights were effectively grounded due to some unforeseen event. In such a case, a traveler may choose such an itinerary when the amount of travel time is not relevant, or at least less important than simply reaching the destination. The nature of a disruption may in some cases change the predetermined accommodation requirements of the entity for accommodation, including without limitation by changing the final or interim location or time, tolerance for time delays or other undesirable conditions.

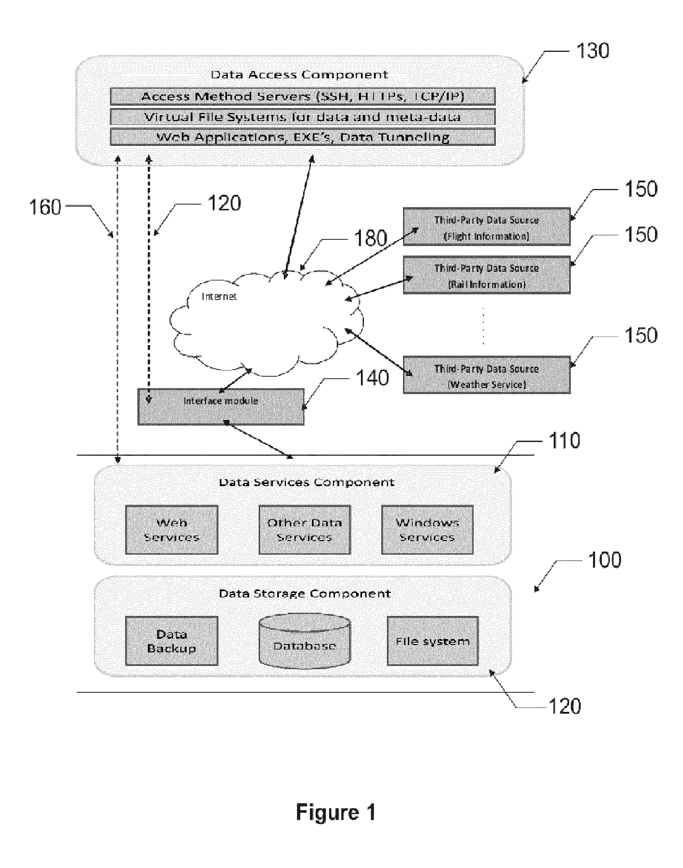

Referring to Figure 1, there is shown a conceptual and high level diagram of one embodiment of the instantly disclosed subject matter. The Data Services Component **110** and the Data Storage Component **120** are shown residing within a secure zone **100,** which may, for example, include one or more servers or a private virtual cloud or servers in a hosted environment. The secure zone **100** is typically protected by one or more firewalls. The Data Services component **110** comprises of a number of functionalities and is configured to, *inter alia,* store received or obtained data in the Data Storage Component **120,** assess the existence of one or more disruptions that affect any of the stored segments, generate alternate itineraries, and send notifications to users of the system via the Data Access Component **130** (which in some embodiments will form part of the instantly disclosed subject matter, although embodiments that only provide for access by equivalent data access systems are also provided for herein). The Data Services Component **110** is configured, in some embodiments, to provide a service in which it is constantly or regularly at predetermined times to assess the existence of disruptions, or of alternate itineraries as they become available that could indicate the existence of a disruption (by, for example, determining an alternate itinerary that is more desirable to the end-user or entity for accommodation, for any reason). The Data Storage Component **120** is configured to store information relating to the operation of the system such as segment data and disruption data, and may also include existing itineraries and traveler data. The Data Access Component **130** forms part of the systems of the instantly disclosed subject matter in some embodiments and provides for secure and validatable data access via the internet, internal communications networks (e.g. a company's intranet or LAN, WAN, MAN or other similar type of communication network or enterprise system), or direct communication access (e.g. telephone line, direct wired or wireless communication, tunneling, etc.) **180.** The Data Access Component **130** may comprise in some cases of a PDA, a web browser on a user computer, an executable or other application on a device, or direct back-office connectivity for an enterprise system or other type of server. Other components are possible, as would be known by a person skilled in the art. In some cases the Data Access Component **130** will communicate with the secure zone **100** via the internet **180** and one or more interface modules **140,** which will ensure that any requests or messages sent from the Data Access Component **130** are properly formatted and accompanied by any necessary credential information, and some embodiments, may be configured to, as a result of a request for information (or other service or activity to be carried out by the Data Services Component), communicate with the Data Services Component **110** or Data Storage Component **120,** to ensure that the Data Access Component **130** has full access to the functionality of the same, but without, for security reasons, having direct access to the components themselves. The optional Interface Module **140** may also perform some validation of outgoing data and format and or limit the information that is sent to the Data Access Component **130.** One example of the optional Interface Module **140** may include a server running a web-application, that is accessible by a web browser or other aspect of a Data Access Component **130,** which is configured to access a firewall and obtain information or trigger certain events by the Data Services or Data Storage Components **110, 120.** The system is also configured, in some embodiments, to communicate with certain third-party data sources **150** to provide (by pull or push) or receive (by pull or push) some or all of segment information, disruption information, traveler information, billing information, booking information, and existing itineraries, as well as any other information relating to the accommodation of entities that are being transported and/or stored. Figure 1 shows alternative direct communication options **160, 170** between the Data Access Component **130** and the secure zone **100,** which may include direct data tunneling, virtual private networks, direct wired or wireless communication media, or other direct communication options as would be known to persons skilled in the art of the instantly disclosed subject matter, and although not shown in Figure 1, there may be an Interface Module **140** for use in conjunction with the direct communication options. The third party data sources **150** may include alerts obtained from airports, airlines, cargo shipping companies, news tickers, traffic lights, news feeds, maps, railway service providers, weather information providers, hotels or hotel booking databases, travel agencies, social media activity (e.g. a level of activity on Facebook^{™}, Twitter^{™}, or other similar social media platforms in general or of trusted friends or friends-of-friends that indicates a disruption) or any other third-party providing information on segments and/or disruptions thereto.

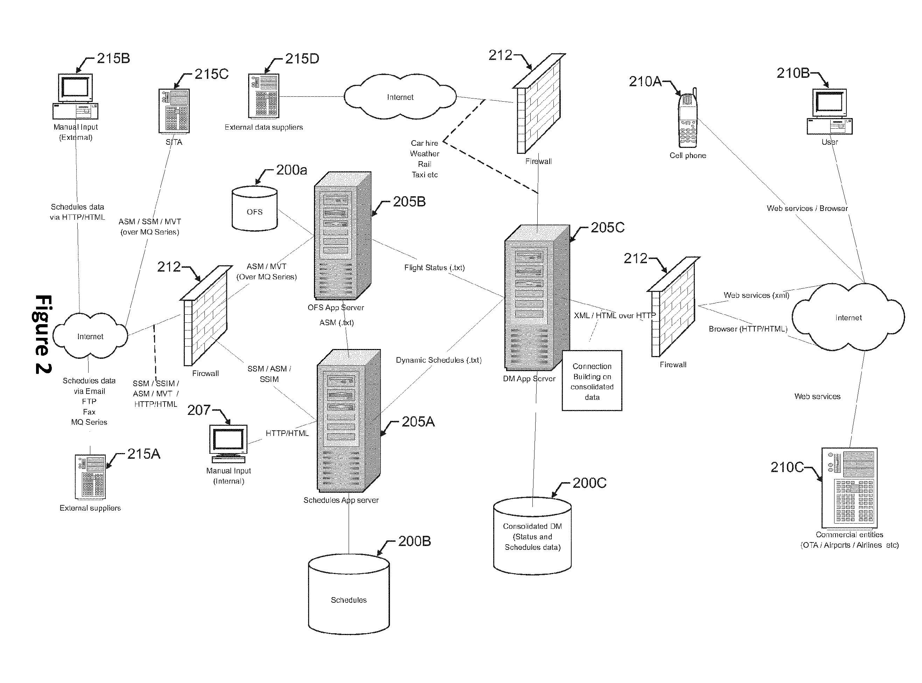

Referring to Figure 2, a more detailed diagram of one possible architecture of the instant system is shown. In this exemplary structure, the Data Services Component **110** and the Data Storage Component **120** are shown as being provided in a distributed manner by the Schedules App Server **205A,** the OFS App Server **205B,** and the DM App Server **205C,** and the data repositories labeled **200A, 200B, and 200C,** which in this example store flight status data, schedules data for various segments, and consolidated data regarding disruptions, users, entities for accommodation, and itineraries, among other data that can be stored in the Data Storage Component **120.** There is also a manual input component **207** for internal review and management of the Data Services and Data Storage Components **(200A, 200B, 200C, 205A, 205B and 205C).** These components reside inside the secure zone, which in this exemplary Figure 2, are protected by one or more firewalls **212.** Shown in Figure 2, there are various Data Access Components, including a cell phone **210A** (which could include smart phones or other personal communication devices) and is capable of communicating by way of an application or a browser thereon, email, SMS or MMS, text message, or automated voice systems, a user computer having a web browser or other executable configured to provide access to the secure zone **210B,** and back-office or commercial systems **210C.** Various third-party data sources are provided for in the exemplary system of Figure 2, including schedule system **215A** which can include provision of data by email, HTTP, FTP, Fax or other communication methods and protocols. Other third party data suppliers are also shown that provide a number of other important types of data **215B, 215C and 215D.**

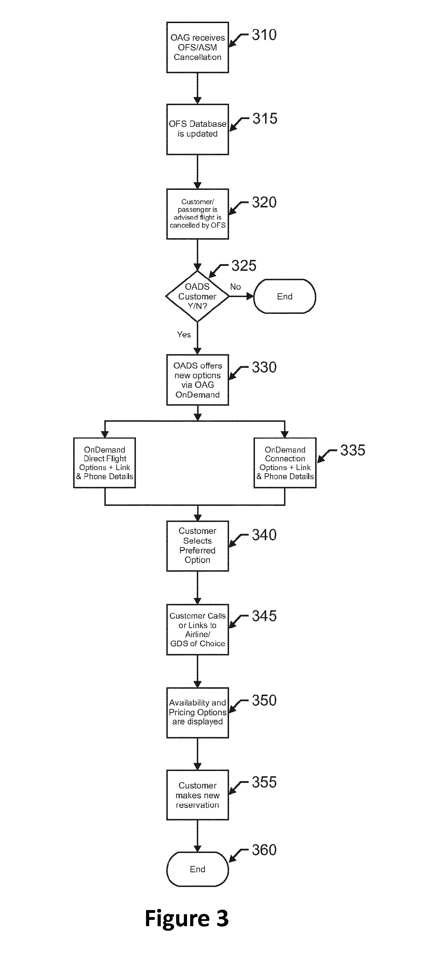

Referring to Figure 3, there is shown an exemplary method of one embodiment of the instantly disclosed subject matter. Beginning with step **310,** the system receives a notice of a cancellation of a segment. The Data Storage Component **120** is updated at step **315** and the Data Services Component **110** determines which segments and entities for accommodation may be affected and prepares and sends required notifications at step **320.** It should be noted that the notification could be a traveler or a traveler's company, or it may be the person or organization that has arranged for transportation and/or storage of cargo or other thing. The method shown in Figure 3 may end at step **325** if this person or organization is not in fact customer. Depending on the nature of the pre-existing itinerary, which in this case relates to flight information, multiple aspects of the Data Services Component **110** may be implicated at step **335,** such as a review of direct segments and options or multiple segments possibilities and options, both aspects including linking and phone details for booking or obtaining further information. At step **340,** the customer may select their preferred available alternate itinerary. At step **345,** the customer is permitted, either directly by phone or via the Data Access Component **130,** to communicate with their segment service provider of choice. At step **350,** the availability and price options are displayed to the customer via the Data Access Component **130.** At step **355,** the customer is permitted to make a selection of an alternate itinerary via the Data Access Component. The process may end at step **360,** although in some embodiments, the Data Services Component may arrange for booking the alternate itinerary, thus making it a pre-existing itinerary in respect of future or as-of-yet-unknown disruptions, including the selected alternate itinerary in the Data Storage Component, updating the information regarding the entity for accommodation in the Data Storage Component, and arranging for billing the customer, including for any price difference between the selected alternate itinerary and the pre-existing itinerary, as well as for providing the service of detecting disruptions, generating alternate itineraries, and booking segments relating to the alternate itineraries.

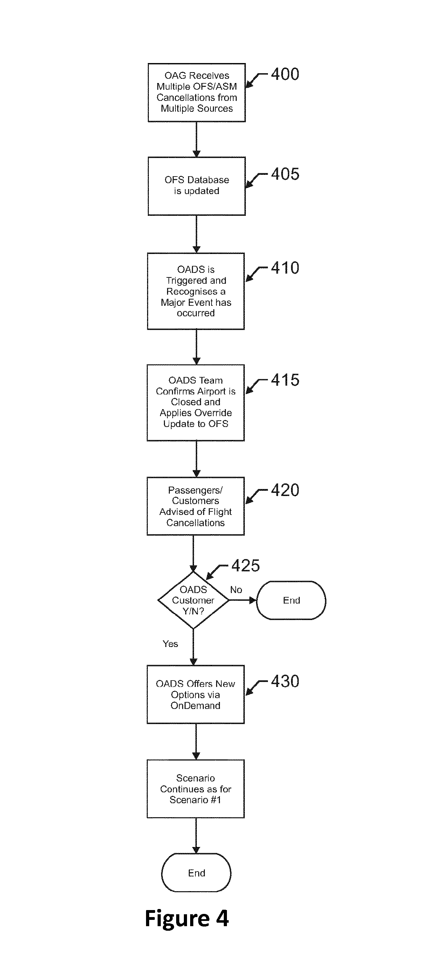

Referring to Figure 4, there is another exemplary method of one embodiment of the instantly disclosed subject matter. At step **400,** a system in accordance with one embodiment of the instantly disclosed subject matter receives notices, from one or more sources, of multiple cancellations of segments. At step **405,** the Data Services Component sends the information for storage in the correct format to the Data Storage Component. At Step **410,** the Data Services Component recognizes the event as a disruption. At step **415,** the manual input component may, in some embodiments, be used to provide confirmation data that a disruption has occurred that may impact one or more segments. At step **420,** a notice regarding entities for accommodation that are scheduled to use one or more of the disrupted segments is prepared and sent to one or more users (in this case the entity is a traveler and is therefore also the user). At step **425,** the Data Services Component determines if the user is a customer and ends the process if not. If the user is a customer, then the system proceeds to step **430,** wherein alternate itineraries are provided to the user and the process continues as per Figure 3, and/or the associated description above, after step **330.**

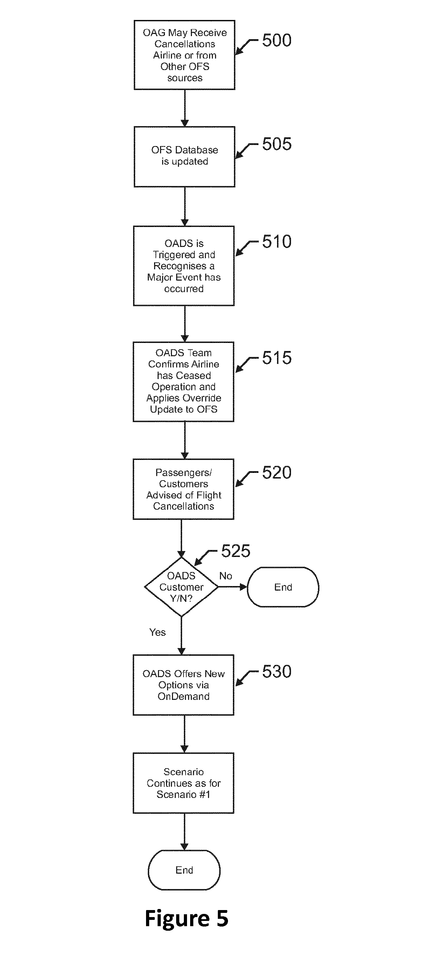

Referring to Figure 5, there is another exemplary method of one embodiment of the instantly disclosed subject matter. At step **500,** the system receives notification of cancellation of one or more segments. At step **505,** the Data Services Component sends the information for storage in the correct format to the Data Storage Component. At step **510,** the system, based on the stored information from step **505,** recognizes the existence of a disruption and the Data Services Component initiates one or more data services. At step **515,** a manual confirmation of the existence and extent of a disruption is entered into the system and an update to the Data Storage Component is updated to reflect this change on all affected segments. In some other embodiments, the Data Services Component is configured to detect, assess and confirm the existence of one or more disruptions automatically based on predetermined rules relating to disruptions, segments, itineraries, entities, or a combination thereof. In step **520,** all affected users are advised of cancellation of segments (in this case, flights). At step 525, the Data Services Component determines if the user is a customer and ends the process if not. If the user is a customer, then the system proceeds to step **530,** wherein alternate itineraries are provided to the user and the process continues as per Figure 3, and/or the associated description above, after step **330.**

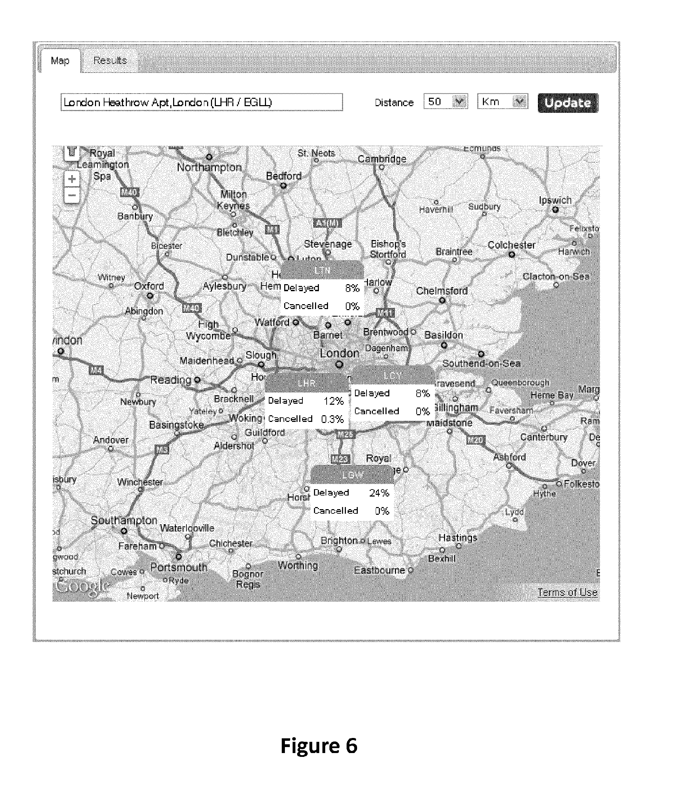

Referring to Figure 6, there is provided a map that is a graphical representation of segment information and disruption information. It is, in some embodiments, provided to the users of the system to provide alternative segment and/or itinerary data. It is also used by the Data Services Component **110** to determine the existence of possible disruptions, as it measures the percentage of delays and cancellations at available airports in a given region, and is also used to calculate and determine segments for possible alternate itineraries.

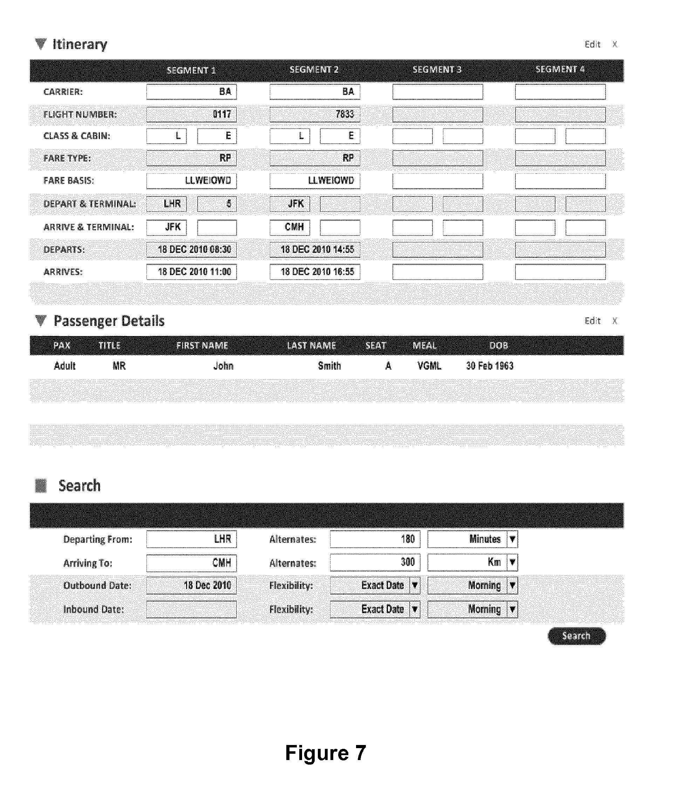

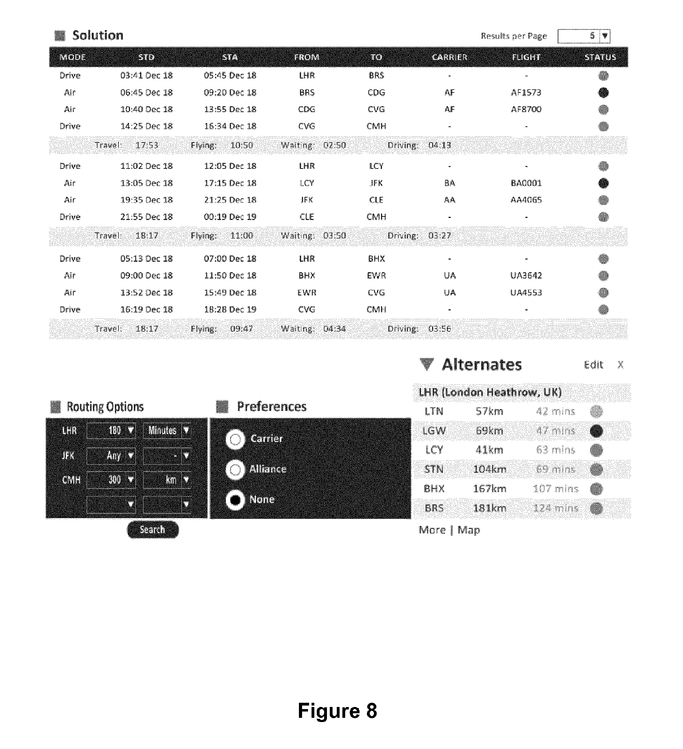

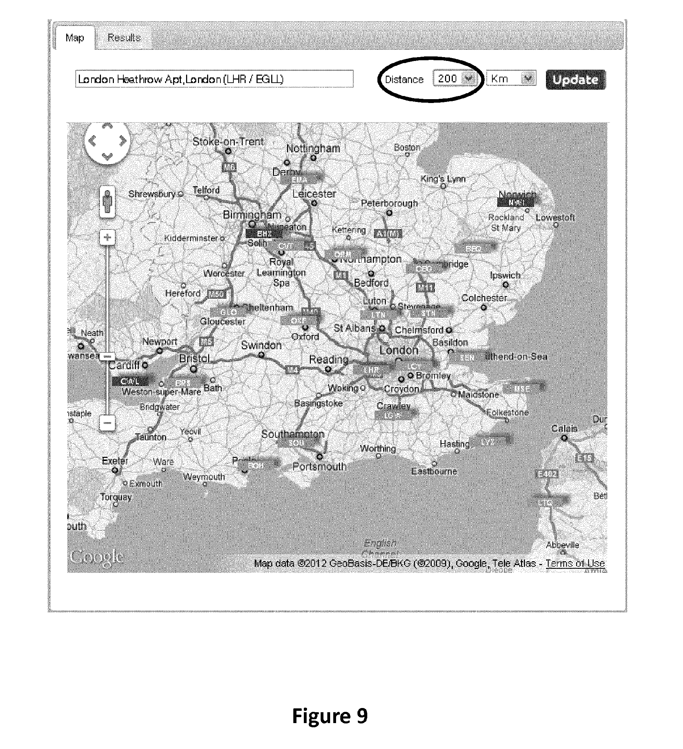

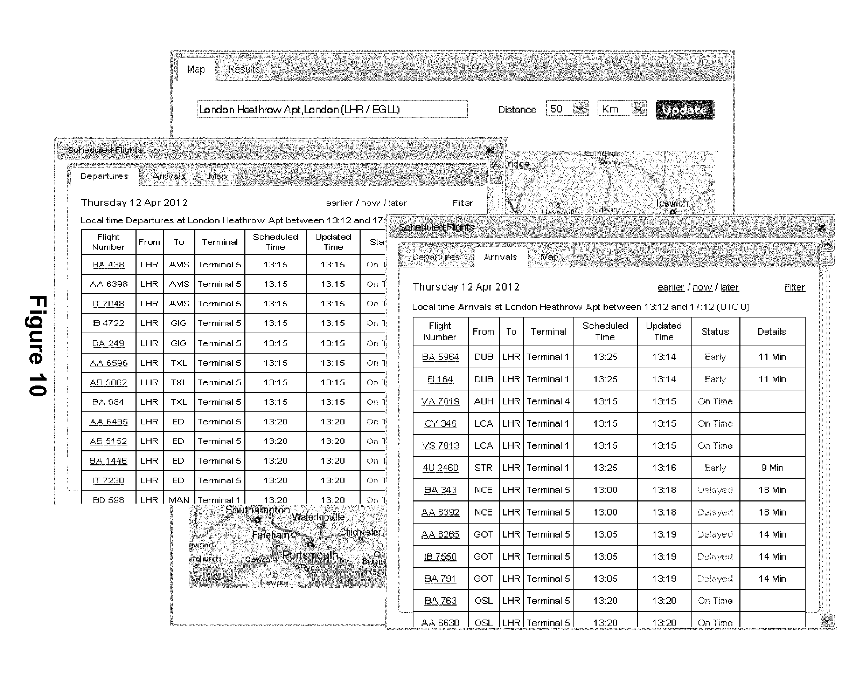

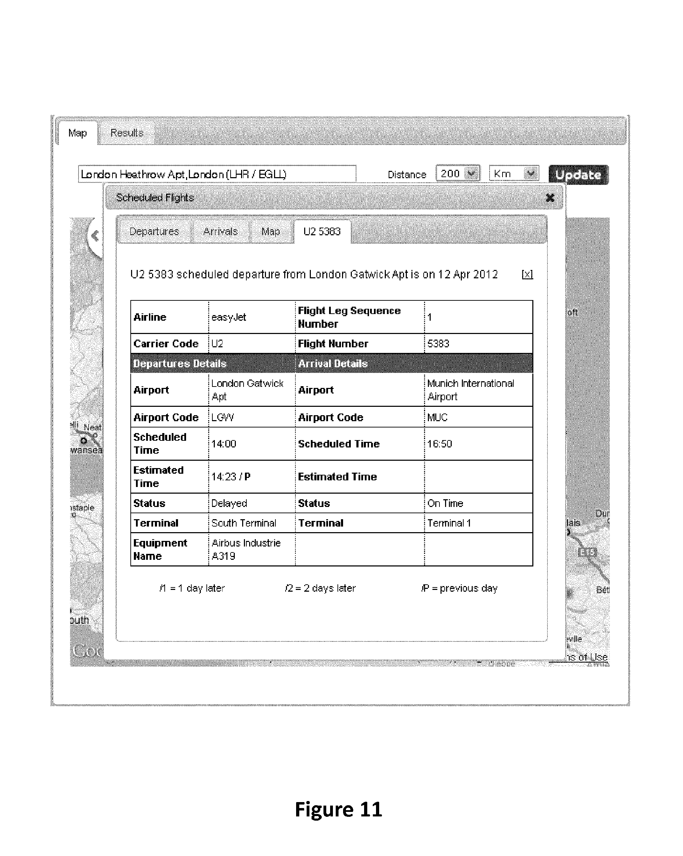

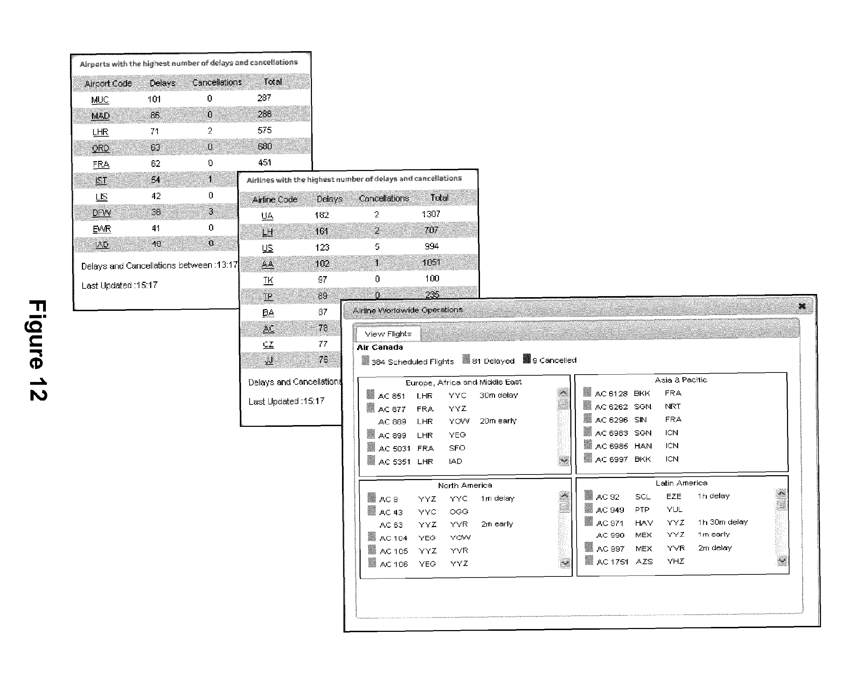

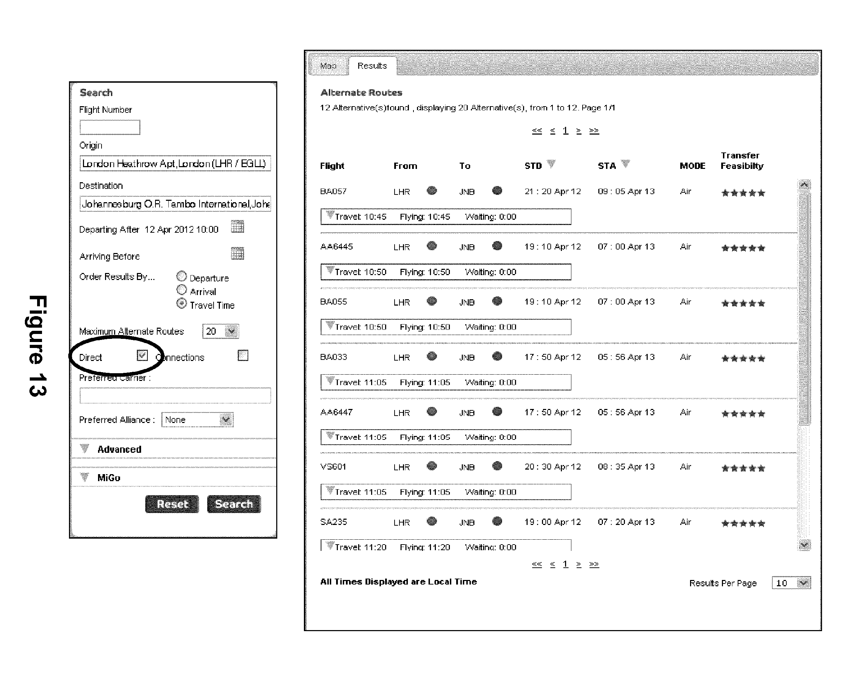

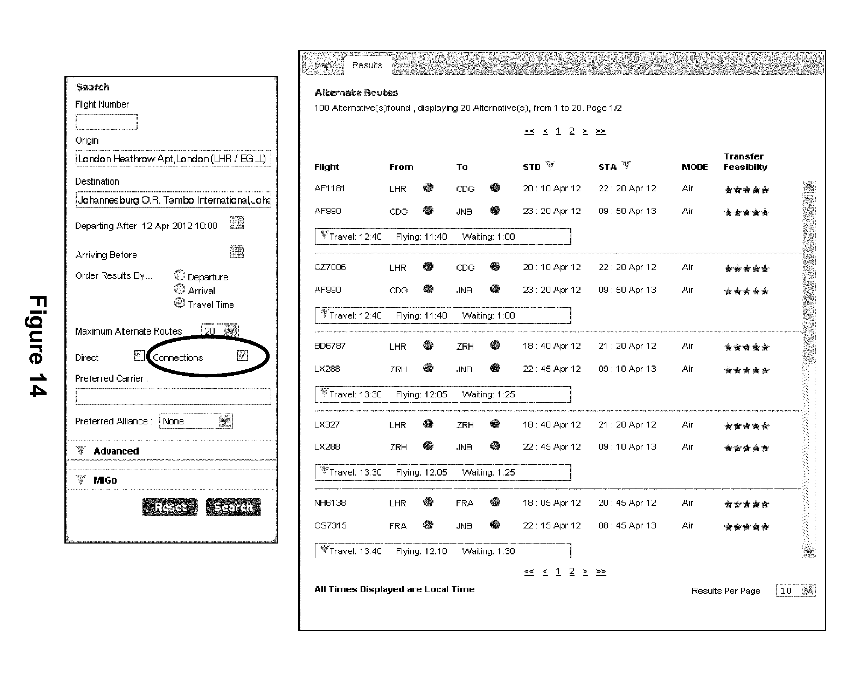

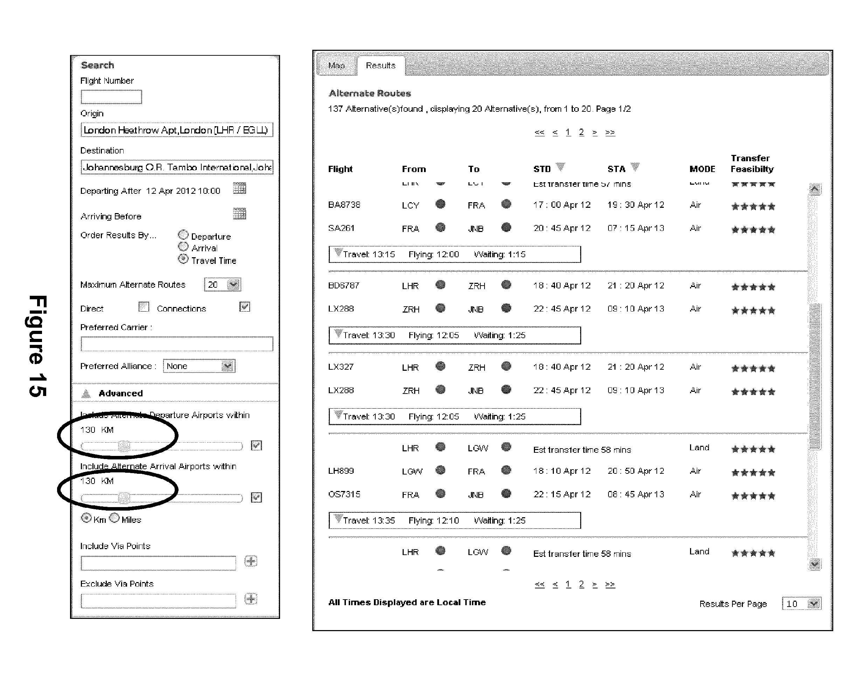

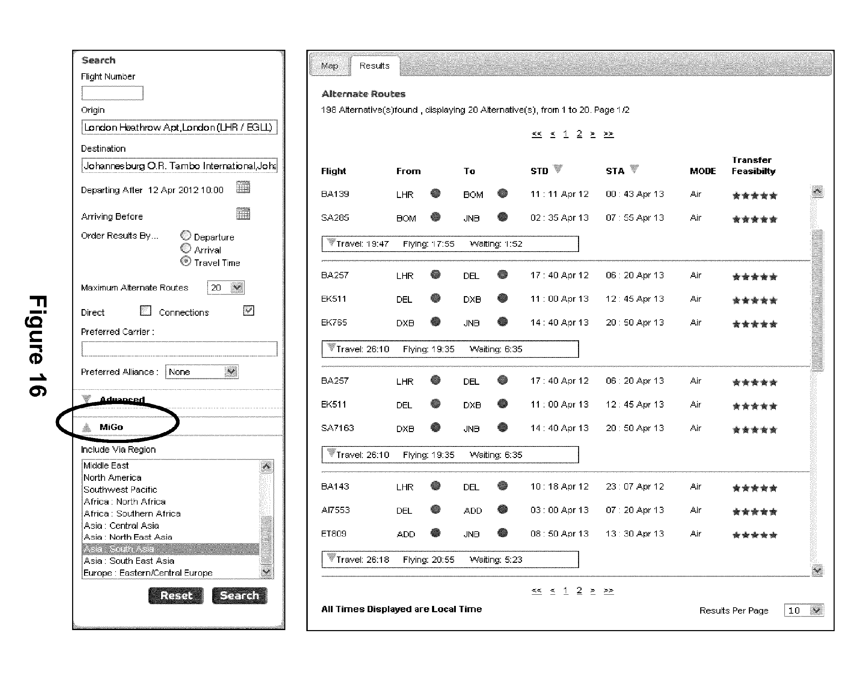

Figures 7 to 16 show various screens shots, in embodiments, of the instantly disclosed subject matter. In embodiments, these screen shots may be located on various Data Access Components **130** and are web pages that provide for data input and output for a user on a user computer or other device (e.g. smart phone). Figure 7 represents information concerning a pre-existing itinerary and an entity for accommodation (which is in this case a traveler on two flights). A search dialog box for other possible alternate itineraries is also shown, having different options for the traveler. Figure 8 shows a number of different possible alternate itineraries having multiple segments and segment modes (e.g. driving, flight), and status information regarding each possible segment. An ability to change the routing options, preferences and alternatives may also be provided for.

In some embodiments, information relating to the traveler (or other entity for accommodation) and the traveler's (entity's) predetermined itinerary will be communicated to the data services component of the system at which time the system can dynamically assess alternate itinerary based on the most up-to-date information. Having this information stored on the Data Storage Component permits the Data Services Component to regularly or constantly review the stored predetermined itineraries to dynamically determine the existence of disruptions (which includes when generated itineraries become available, before or during a predetermined itinerary, that are more desirable because they may be, without limitation, faster, more inexpensive, have better or more optimal options or conditions available for one or more associated segments, provide access to desirable interim locations, or any other reason) and associated alternate itineraries, which can be determined as changes to planned or actual information occur and communicated to the entity, user or customer in real-time thereby providing a high degree of flexibility.

In some embodiments of the instantly disclosed subject matter, there is provided a data storage component and a data services component. The data storage component and data services component may consist of or reside on: (a) a single device or distributed across several devices; (b) one or more virtual devices associated with one or more local or remote devices; or (c) a cloud-based architecture. In some cases, for reasons of security, although not required for operation of the instantly disclosed subject matter, the data storage component and the data services component are protected by one or more firewalls to prevent unauthorized access.

The data storage component is any medium capable of storing information or is an organized collection of digital data. It may be a physical, virtual, stand-alone, distributed or cloud-based media. It may comprise any of a number of commercially available data storage systems or standards, including SQL, Oracle, DB2, Unix- or linux-based systems, MySQL, ODBC, Jet, Access, and data warehouses. It may also refer to the database management system, as well as the storage medium and/or the data stored thereon and/or the schema representing the structure of the tables in the database. Other data storage systems are known that operate in a similar fashion and can therefore be used, although while the instant disclosure relates to known systems of databases, it is not limited to the current structure or forms but encompasses any future changes or additions to the database systems or technologies that can perform similar functions as set forth herein. Some exemplary embodiments may employ a database server or database software residing on a server for storage of the information. Other embodiments may use implementations wherein other storage means are possible that do not require a database, such as a file-based system. The data storage component is configured to store segments information and disruption information, and have that information updated and stored thereon in real-time. In some embodiments there is an extremely high level of granularity of the information, including highly specific information relating to segment data, such as when a flight segment has left or arrived at gate, when a flight segment has touched down or taken off, when a flight segment is delayed in-flight due to inclement weather or a closure of airspace and/or airports that impact the timeliness or location of the flight destination. Further discussion of such granularity in segment and disruption information is disclosed below. In some embodiments, the data storage component is configured to store predetermined itineraries. In such embodiments, the systems and methods of the instantly disclosed subject matter can be configured to assess all stored predetermined itineraries and generate alternate itineraries in real-time as disruptions occur. The alternate itineraries may or may not be communicated directly to the data access components and/or consumers of the predetermined and alternate itineraries as disruptions occur or as alternate itineraries are generated. In some embodiments, predetermined itineraries are communicated to the data services component, which may or may not be stored on the data storage component, and an assessment and subsequent generation occur at the time the predetermined itinerary is communicated to the systems of the instantly disclosed subject matter, or some time thereafter.

In one embodiment, data stored on the Data Storage Component may comprise of both planned and actual information. The planned information includes schedule information pertaining to segments and/or pre-existing itineraries as the segment provider has planned or as they have provided to the system. The planned information generally pertains to future events as they are expected to occur or as they have been planned or scheduled. Examples could include flight, bus, taxi or other transport schedule data. The actual information consists of information relating segments as they actually happen, including changes to the planned information as knowledge of such changes occur (i.e. a flight has been delayed or cancelled), whether due to the rescheduling of a future event, such as may be required due to a disruption, for example, but it also refers to any information regarding a segment as it develops in real-time that may not necessarily being reflected in planned data. In other words, actual data may comprise of information that corresponds to the planned data, except that it reflects actual events or circumstances, and it may also include actual information about a segment that may not be included in the planned information. For example, a segment may be related to a scheduled departure from a storage facility at a particular time, but in reality the segment leaves some short time before or after that particular time; this information may never be reflected in conventional systems or in any planned or scheduled info, but the actual information of the instantly disclosed subject matter contemplates the storage of such information. Such information can be used, for example, to determine if a connection between a segment, which may have departed after the associated time in the scheduled information, and the following segment in a pre-existing itinerary may become impossible or impracticable, and this cause a disruption in respect of the following segment. In addition, actual information may include more detailed information that is unavailable in most segment schedules, including, without limitation, movement of storage containers from a storage location, loading onto a cargo ship or train bed, actual departure of the cargo ship or train, push-off or docking at a flight gate, actual take-off and landing times, unplanned or unexpected vacancies at hotels or storage facilities, or actual loading or unloading times of a ferry or cargo ship. These are examples of actual information for storage and are not intended to be limiting but rather to give a indication of the kinds of information that is not contained in any schedule but permits the systems and methods of the instantly disclosed subject matter to obtain, use and provide highly accurate segment information. Most commercially available systems make segment information available only at fixed, predetermined times (usually daily), whereas the instantly disclosed subject matter may be configured in some embodiments to provide data that is substantially constantly updated in real-time.

The Data Services Component may consist of any one or more devices (including stand-alone, distributed, virtual, or cloud-based devices) that provide sufficient computing processing power to, *inter alia,* receive and send information regarding segments, disruptions and itineraries, communicate same to the data storage component, determine whether any predetermined itineraries are affected by one or more disruptions, and generate alternate itineraries. In some embodiments, the data services component is configured to communicate such information to a data access component as a notification service intended to notify one or more consumers of the information of one or both of the existence of a disruption and possible alternate itineraries. Booking information may also be communicated as part of the notification, including price and availability, service options (e.g. rental car class, seat/service class of flights, hotel options, available storage options, or any other option available to each segment for the transport entity during such segment), and a selection option to book the segments of the alternate itinerary. In some embodiments, the data services component may comprise a booking resource configured to book the segment on behalf of the transport entity with the segment service provider or their agent. A notification service, automated or otherwise, may be provided by the Data Services Component, in which the existence of a disruption is communicated to all users or entities that are associated with disrupted itineraries. In some embodiments, the notification service also provides candidate alternate itineraries, an option for booking the segments that make up a selected alternate itinerary, and a billing option for charging a booking fee (on top of billing for differences in cost associated with using new segments or cancelling segments from the pre-existing itinerary). Payment and billing services are available in some embodiments in the Data Services Component that are configured to invoice a user of the system directly, either by sending a bill or obtaining payment directly from, for example, a credit card account or wire account, information regarding which is available to the Data Services Component. In other cases, the payment and billing information may be provided to Data Access Component so that a third party who is employing the system as an enterprise service, or by using back-office connectivity (e.g. an online travel agent), can use the information to bill or invoice their client directly. A Data Services Component may also have the capability to calculate average surface transport times to alternate segment points, such as different regional airports, including data on local transport delays. Another aspect of the Data Services Component in some embodiments is the ability to substantially constantly, and in real-time, be assessing stored itineraries for the existence of more desirable itineraries (thus constituting a form of disruption). As such, such services can dynamically generate better itineraries, which can be presented to the user and booked by the Data Services Component booking resource, for fees or commissions. In embodiments, one or more fee information may be stored in the data storage component. The one or more fee information may be associated with a user. In embodiments, the one or more fee information may comprise: a fee associated with generating one or more alternate itineraries, a fee associated with booking one or more alternate itineraries, a fee associated with accessing the data services component, a fee associated with accessing the data storage component, or a fee associated with accessing a data access component, or any combination thereof.

The booking resource may comprise of services, which in some embodiments reside within the Data Services Component, although they need not do so, to communicate with the segment service providers to arrange for the purchase of the use of segments associated with a selected alternate itinerary. The communication may involve determining the cost and availability, as well as the existence of accommodation requirements associated therewith, as well as providing purchase and confirmation information regarding the segment in question.

In some embodiments, the Data Services Component may dynamically create alternate itineraries based on the existence of "more desirable" segments. This may be because of disrupted segments in pre-existing itineraries, including when segments having one or more predetermined accommodation requirements become available that are not found in, or are more desirable than, segments in the pre-existing itineraries. In some embodiments this consists of dynamic schedule building. In one exemplary embodiment, the system assesses planned and actual accommodation information (including, without limitation, air, rail, sea and ground transportation, storage facilities, and hotel information). Once information that may constitute a change or a disruption to a segment is received it undergoes format checks and validation. In some cases, the Data Services Component utilizes the change/disruption information by breaking it down into its constituent elements (i.e. transportation/storage mode, time/date, accommodation requirements, cost, availability, originating, interim and final times/locations), compares the data, then consolidates the output into the smallest amount of changes possible, in part to ensure that unnecessary changes are removed from generated alternate itineraries. Data received from data suppliers is often hugely fragmented over different days and dates and the systems of some embodiments are configured to consolidate the data so that it is the consistent across different fragmented itineraries. In some embodiments, the processes of loading data into the Data Storage Component and use of the data by the Data Services Component deals with cancelled data, new data and changes to existing data. This feed of data is split into separate streams so that multiple updates can be made concurrently in the most efficient way possible.

In some embodiments, real-time feed of data gives information such as estimated and actual departures and arrivals, as well as movement and diversion data, residence time (i.e. the time an entity for accommodation may remain at a single location, such as a storage depot or at a hotel), and actual current storage conditions, which is stored in the Data Storage Component. One key point of this process is that it may cause data to be split - for example a flight operating every day in the next week may only have the current day's flight altered, therefore the system copes with changing just the current day, leaving the other data as is. In some embodiments, the system may consider portions or aspects of a predetermined itinerary as a stand-alone itinerary and generate alternate itineraries for one or more portions of a predetermined itinerary, while not altering other portions of the predetermined itinerary.

The real-time data feeds in some embodiments are being updated as the events occurs, or shortly thereafter. One major advantage to this system over others is that segment building runs against this latest data (i.e. when the segment request is made all changes up to that point are included in the results). Accordingly, in one example, if a flight is now departing later than scheduled, it could be that this later departure allows more segments to be built than were previously possible (i.e. previously the segment time was too small to consider other segments in an alternate itinerary). Real-time data feeds may be supplied by users of the system or by third-party suppliers of information, or by the segment providers or associated suppliers (e.g. airports can provide flight information).

The segment building process encompasses such key aspects as: minimum/maximum connecting times, traffic restriction and comment data, interline agreements, incompatible carriers, cabotage (or other restrictions relating to the building of itineraries that may violate domestic or international laws or trade rules), wide to narrow body filtering, surface to surface, include/exclude low cost, the ability to build "double" segments, weather systems, pre-existing accommodation requirements, and ranking of results to choose the most viable routes. Also segment building process is configurable, allowing an end user to determine their preferences for segments, such as: airports/cities (including optional via points), date(s) and time(s), maximum or minimum elapsed or storage/residence time(s), minimum/maximum segment times, maximum circuitry, preferred carriers, enable online, inter airport, transportation type, avoidance of certain territories, inclusion of customs and security rules and preferences (e.g. Nexus-enabled travel), and sorting of results via departure/arrival/elapsed time/accommodation requirements. The system not only includes direct flights (which can include stops) and single segments, but also double segments (i.e. that are flights via separate places but result in reaching the same destination). In times of disruption this is important as, for example, travellers or shippers may not be as concerned about the length of time that the journey takes, but that they can get to their destination by any means conceivable.

Some embodiments may optionally comprise a data access component. This would include an access component for communicating with the systems and devices of the instantly disclosed subject matter for determining alternate itineraries. This may include a server (physical, virtual, stand-alone, distributed or cloud-based) or other such device configured to interface a user or user device with the data services component and/or the data storage component. Although such interface modules may not be required in all embodiments, this could include a server running a web application for interfacing with a web browser on a user computer, a PDA or other hand-held device, executable program running on a computer or server, or direct server-to-server access (e.g. XML segment). While these examples are limited to HTML protocols over the web, it should be recognized that other segment protocols and communication media/networks can be used. Some of these alternate protocols include: HTTP (in some cases HTTP for transfer of HTML), FTP, IRC, IMPPpre/IMPPmes, POP3, RTSP, S-HTTP, SMTP, SNMP, SOCKS, SOAP (XML/SOAP for webservices) or TELNET. The data access component may also include the user device itself apart from or as part of the interface module. Such devices may include any personal communication device (e.g. iPhone^{™}, Blackberry^{™}, or any other type of phone or smartphone), a web-browser on a computing device, a stand-alone executable running on a computing device, a device having direct or "tunneled" access to the data services component and/or data storage component, or a server(s) of an applicable service provider (e.g. a travel agency, airline, insurance company, airport, car rental company, cargo or materiel shipment/storage company) to seamlessly provide the functionality to its representatives or customers. The Data Access Component may also provide information to or receive information from the Data Services Component by way of SMS, MMS, other text message protocols/formats, email, fax, and voice (including by way of automated voice recognition systems) without departing from the spirit and scope of the subject matter defined herein. In other embodiments, the Data Access Component can facilitate the provision of automated notification to end users regarding disruptions, alternate itineraries and the availability of options for booking possible alternate itineraries.

In some embodiments, if an alternate itinerary is booked, or otherwise accepted by an entity for accommodation, such an itinerary could then become a predetermined itinerary in the event of a further disruption that could affect such a booked or accepted alternate itinerary. It should be noted that the predetermined accommodation requirements of a predetermined itinerary may not be the same as those of its associated alternate itinerary or itineraries. For example, if a disruption renders moot or changes the predetermined accommodation requirements of a predetermined itinerary for a given accommodation entity, then a data services component may devise an alternate itinerary. A more specific example could include a predetermined itinerary for disaster relief supplies, which, prior to a disruption, consists of a single segment having predetermined accommodation requirements of storage at a certain temperature range for a given amount of time, and after such disruption, the accommodation requirements would include segments for transporting the disaster relief supplies from the storage location to a location of a storage facility in a city experiencing a need of disaster relief, wherein the storage facility meets the storage requirements (e.g. temperature, humidity, etc.). Another specific example may include a circumstance in which an entity for accommodation may have predetermined accommodation requirements of being at a particular destination at a given time (e.g. a business traveler must be in New York by the following day), but in light of a particularly widely-felt disruption (e.g. closure of all north Atlantic airspace due to volcanic ash), the predetermined accommodation requirements may solely include reaching the destination in any given time (e.g. the business traveler will accept any itinerary to get to New York, even if it takes many days).

In some embodiments, a single segment may in fact refer to multiple segments, such as in the case where a trip consisting of multiple flights on different planes having at least one stop, at which there may or may not be a change in actual planes and may be referred to by a single flight number or code. This may be referred to as a segment having multiple legs, since a leg may refer to a single flight, trip or storage event. Accordingly, a segment may consist of a single leg or multiple legs (but a leg cannot consist of multiple legs). The segment provider often classifies such trips under a single segment, but the instantly disclosed subject matter is capable in some embodiments as recognizing a single segment as multiple sub-segments and using information regarding one or more sub-segments to create alternate itineraries. Segment information may include other information relating to the segment, such as availability, price, fare rules and options, service upgrades, atmospheric and/or storage conditions, duty/customs requirements, cancellation risk information, minimum storage/residence times, traffic conditions, weather conditions, or any other rules, options, or requirements that may be necessary to build itineraries. In some embodiments, a connection may be used to refer to information relating to the interface or joining of two segments in an itinerary. For example, an itinerary may include segment A (from hotel 1 to airport 1), segment B (flight from airport 1 to airport 2), and segment C (train from airport 2 to hotel 2); each of the three segments are connected to each other sequentially by the Data Services Component. A disruption will result when it becomes apparent that a segment cannot be connected to a following segment, which can happen because the first segment is arriving late or the connecting segment is departing early. Segments, or legs within a segment, may become, due to timing or lack of appropriate characteristics, unable to be connected as they may have been in a pre-existing itinerary and thus impacted by a disruption. In some embodiments, a disruption can include a user-derived change in circumstances, such as a change in travel plans or requirements. Disruption may also include some event or condition that removes the ability for a segment or segment service provider to provide necessary pre-existing accommodation requirements, such as storage conditions (e.g. temperature, humidity) or availability of particular services or conditions (e.g. non-smoking room, first class service, PDA ticket recognition by a particular segment provider, avoidance of a particular territory, etc.). A disruption may be caused by achieving a threshold level of activity on Facebook^{™}, Twitter^{™}, or other similar social media platforms in general or by trusted friends or friends-of-friends of a user. A disruption may be caused by changes to existing segments (including changes to available options or characteristics to meet user or entity preferences, i.e. accommodation requirements), or the creation of new or previously unavailable segments, that render an existing itinerary (or segment thereof) less desirable; such a disruption can occur even when there has been no change to or effect on the pre-existing itinerary or changes in user/entity preference.

In some embodiments, disruptions for other travelers or entities that are associated with the entity for accommodation can be tracked and then used to predict disruptions that could impact segments for that entity for accommodation. For example, a first entity's phone may not have GPS, but if that entity is on Train #123, and another entity is also on Train #123 and does have GPS on their phone, the system effectively can know where the entity for accommodation is, and that it is going to be late to make a connection for a subsequent segment. An entity that is scheduled to catch Train #123 may now have to wait longer, and another option may become faster for that entity. Another entity may not have had the chance to catch Train #123, but since it is late, maybe now they will.

Crowdsourcing segment information, an entity's location and/or accommodation requirements can be applied to determine disruptions and/or possible alternate itineraries. In this case, crowdsourcing refers to the ability for multiple users of the system to collaborate to determine a possible solution for one or many of the entities for accommodation. In some cases, the data access, data services and data storage components may in fact be used by the users or entities to communicate information to one another relating to their accommodation or accommodation requirements to one another, which the system can use to determine the existence of a disruption.

In some embodiments, accommodation requirements may be provided by the user to the system which are then used by the components of the system to determine the existence of disruptions and also generate alternate itineraries. In some cases, the accommodation requirements are determined or predicted by the system using information associated with the user and/or entity. This may include accommodation requirements of entities that are related to the same user (i.e. multiple cargo units being transported by the same user, or multiple business travelers who are employed by the same company and whose travel arrangements are handled by the same corporate department), other entities on the same segments or related segments (such as the segment that performed the same accommodation on an earlier date, like an earlier scheduled flight between the same two locations), or other users or entities that share the same social circles or otherwise socially connected to the user or entity in question (i.e. the traveler's friends and/or friends of friends and/or friends of friends of friends all have similar preferences for fare rules, so the system may estimate that the traveler has the same preferences and thus create a set of accommodation requirements for that traveler, use them to determine the existence of a possible disruption, such as a lack of first class on a particular route, and then generate alternate itineraries that may meet the traveler's preferences).

In some cases, the accommodation requirements for a user or entity for accommodation may be associated with certain levels of tolerance that can also be used to determine the existence of a disruption. For example, a user can set a tolerance for cost, timeliness (for any given segment or overall itinerary), connection wait times, atmospheric conditions, service levels, and any other accommodation requirement relating to an overall itinerary or segment therein, thus permitting the system to assess whether a minor improvement to one particular accommodation requirement, but which negatively affects any other accommodation requirement (or vice versa) retains all the accommodation requirements within the tolerance levels associated with a user. The tolerance levels can be predetermined (as, for example, entered by the user or other third-party) or predicted by the data services component in the same way that accommodation requirements are predicted (as described above).

In this disclosure, the term user is differentiated from the entity for accommodation, although they may refer to the same entity in some cases. When the entity for accommodation is a traveler, then that entity may, in many cases, be the user. When the entity for accommodation is cargo whose transport and/or storage is being requested by a third-party, then the third-party may be the user of the system. In general, the user is the end-user of the system and the entity for accommodation is the entity that is being accommodated by being transported/stored from the original time/place to the final time/place. The specific or general location of the entity for accommodation, as determined, for example, in real-time by a global positioning system (or other geo-positioning system, using satellites, telephone antenna, or other types of determining the position of an entity using various equipment capable of performing triangulation or similar methods) coupled to the data access component, may provide information that permits the Data Services Component to determine the existence of a disruption. For example, a data services component may be capable in some embodiments of determining that the predetermined itinerary has become less desirable, in terms of cost, travel time, access to desirable segment modes or destinations (final or intermediate) than a generated alternate itinerary based, in whole or in part, on the current location of the entity and the stored segment information. It should also be noted that in some embodiments, the current location of the entity for accommodation may also serve as information to create an alternate itinerary, irrespective of whether the location of the entity for accommodation is a cause of the disruption.

In some cases, the Data Services Component may provide for assessing whether certain predetermined accommodation requirements relating to requirements of the entity for accommodation can be provided for at each segment. The term "predetermined accommodation requirement" may refer to any requirement, or possible available option, for an entity for accommodation on any given segment or itinerary. It may include a requirement relating to available service upgrades, cost reductions or increases, storage conditions, tolerance for risk of delay or disruption, tolerance for duration of a segment, tolerance for a wait between segments, and tolerance for a given type or mode of segment. Other requirements or options for a particular segment as may be required or desirable (or undesirable) for a given entity or user can be implemented in the system as predetermined accommodation requirement that can be used in generating and ranking alternate itineraries, as well as in triggering the generation of alternate itineraries and/or recognizing something as a disruption.

In some embodiments, a fee may be applied for generating or booking alternate itineraries. The fee may be charged to the end user (for example, a traveler) when an alternate itinerary is offered or accepted to such end user after a disruption has affected one or more segments of their pre-existing itineraries. In other embodiments, an enterprise user of the system may be charged a flat rate for the ability to offer the capabilities of the instantly disclosed subject matter for its customer, or alternatively charged to the customer to have the benefit of being offered alternative itineraries. In other embodiments, other types of alternative users, such as portable storage container companies, airlines, or car rental agencies may be charged a fee, as direct revenue or as a commission, for information that permits such user to allocate its resources to segment hubs which may be unaffected by a disruption or is otherwise experiencing an increase in accommodation of entities for accommodation, as shown by the data in the Data Storage Component. As an example, a traveler is faced with a disruption after one or more first segments in her pre-existing itinerary, and the traveler receives notice of a disruption during one of the segments of the pre-existing itinerary, wherein the notice is accompanied by several alternate itineraries with an option to book any one of same, for an additional fee. The segment service provider may, in addition or as an alternative, provide a commission for any additional fees paid to book any segments of the alternate itinerary. In addition, certain organizations may be charged a flat fee, plus usage fees upon generation and/or booking of alternate itineraries, for the ability to have access to the system in order to determine alternate itineraries for its entities for accommodation as a contingency for disrupted pre-existing itineraries. Also, advertisements can be used to generate additional revenue opportunities, specifically directed to passengers or users of storage or shipment facilities that, because of their locations, destinations, predetermined accommodation requirements, have a likelihood of interest in a particular good or service that can be offered for sale or to be marketed via an online platform or other interface of the Data Access Component. In some embodiments, a large organization having a large number of persons or resources that must be accommodated for travel, shipping, transportation, storage, or residence may provide a fee or commission for the use of the system to manage its own resources or employees/representatives (e.g. travel department of a large corporation). In addition, organizations that transport or store goods and/or people, or those that insure or otherwise underwrite such organizations, may wish to use the functionalities of the service to, *inter alia,* assess and/or measure the risk and/or cost of disrupted itineraries, as well as to ensure contingency plans for accommodation of entities. Flat fee, commission-based, monthly licensing schemes, or other revenue generation models are possible for all of the above-mentioned uses of the systems and methods of the instantly disclosed subject matter. There may also be a subscription fee or a fee for downloading an application, executable, or user credentials/account information for accessing and using the system.

In some embodiments, the system can store information relating to relationships between the users (enterprise or otherwise, such as travel agencies, corporate travel departments, or cargo/shipping organizations, etc.), customers (which may in some circumstances be considered users), entities for accommodation, third-party suppliers of data, segment providers, or any other party that accesses and/or provides or supplies information to the system. This relationship information can be used to measure usage characteristics by any such party, as well as to manage the relationships between parties by, for example, offering incentives to a user to maintain a relationship with a particular agent and/or segment provider. It may lock usage for a particular data provision or segment provision (or related service provision) between users, customers, travel agents/shipping organizations, or data provider. In some cases, the relationship data may be mined to determine the existence of disruptions that may be associated with particular relationships (and possibly generation of alternate itineraries can be implemented based on different relationships).

In some embodiments, the data storage component and the data services component reside on a private virtual cloud ("PVC") that is protected by a firewall. Access to through the PVC is restricted by a PVC interface module, which in this embodiment is contained in the web application server located on the internet or other public network. Access, as used in this disclosure, may refer to a direct request from the data access component directly for access to the location of storage of the requested information inside the PVC, or a request for retrieval of information therefrom by, for example, the interface module upon a correctly formatted request accompanied by validated or validatable security credentials. This interface provides security while permitting the external user to make requests of the Data Services Component and/or the Data Storage Component. In some embodiments, the Data Access Component includes log on credentials to permit access to a web services server, which can use standard web services security to access system components that are protected (i.e. Data Storage and Data Services components). The web services server will process requests from the data access component and then using a different predetermined format and security protocol access the Data Storage and Data Services components to request or provide the necessary information. In such embodiments, no external user is permitted to directly access the Data Storage and Data Services components and vice versa and there is no unauthorized access. Access by third-party data providers that provide information relating to segments, itineraries, disruptions, and any other information for the Data Storage component may be configured in a similar manner. In some instances, access to the web services server, which serves as the interface module, can only be accessed with knowledge of the correct URL associated with the web services server. In embodiments in which the Data Access Component utilizes web browsers on end-user devices, HTML (or other mark-up languages) and Javascript (or other scripting languages) can be used to communicate with web servers to authenticate access requests or other requests. In some embodiments, the authentication process may permit direct access to the Data Storage and Data Services components without using an interface module.

When the interface module, which may reside on the internet or in a "demilitarized zone", receives a request for access for information from a data access component, it may in some embodiments make a further request through one or more firewalls into the PVC to the data services component to, *inter alia,* update information on the data storage component (which may include, but is not limited to, information relating to one or more of new or updated segment information, new or updated disruption information, one or more predetermined itineraries, predetermined accommodation requirements associated with segments and/or itineraries, or any combination thereof), assess stored or communicated predetermined itineraries to determine if they contain segments that are affected by disruptions, generate alternate itineraries that meet predetermined accommodation requirements, notify or assess the existence of disruptions, or a combination thereof. The data services component may also request or receive information via the interface module from third-party data sources that relate to planned and actual segment information and disruption information. In some embodiments, the information from the third-party sources is provided to the system without request and is provided access to the data services and data storage components in a similar manner as the access requests from data access components, and in some embodiments there is a combination of these third-party data acquisition methods. The interface module may also receive access requests for the booking resource in the data services component from third-party segment providers, including confirmation or other information relating to a booking made by the booking resource.

In some cases, a secure data transfer between any of the Data Access Component and the Data Services Component and the Data Storage Component may occur via a process of data tunneling. Data tunneling refers to a direct, quasi-direct, or virtually direct data connection between components on a network. In some embodiments, it refers to the transmission of data intended for use only within a private network through a public network in such a way that the routing nodes in the public network are unaware that the transmission is part of a private network. Data tunneling is generally done by encapsulating the private network data and protocol information within the public network transmission units so that the private network protocol information appears to the public network as data. Tunneling allows the use of the Internet, which is a public network, to convey data on behalf of a private network. The use of a Virtual Private Network may also be used to facilitate a data connection between the Data Access, Data Storage and Data Services Components and/or any third-party data suppliers. In cases where a high level of security is necessary, the strongest possible encryption should be used within the data tunnel or VPN, and tunneling or use of a VPN can serve only as a convenience.

In embodiments, there is an auto-scheduling feature, which forms a part of the systems and methods disclosed herein. The auto-scheduling feature may communicate with the various components of the systems and methods disclosed herein. In embodiments, the auto-scheduling feature may be a part of the data services component and communicates with the data storage component and/or the data access component. In embodiments, the auto-scheduling feature has within it a report generation aspect. A user of the system disclosed herein may use the auto-scheduling feature to set up generation of one or more reports and/or auto-schedule the delivery of the one or more reports, which may contain various data stored within the system. A user may, for example, have a query that pertains to flights scheduled to depart from London, Heathrow to Toronto, Pearson, between 8:00 am and 10:00 pm. There may be various fields presented to the user for him/her to decide and/or choose what he/she would like to see included in the report for such a query. For example, these fields may be, but are not limited to, carrier information, origin and destination, Flight number range, distance information, cabin type, flight type, or other pertinent fields.

In embodiments, the user may also, via the auto-scheduling feature, schedule or direct the system to run and/or deliver any reports to him/her at any time interval he/she desires. In embodiments, when scheduling the report generation and/or delivery, the user may also provide the report, inter alia, a name, description of the report, the time interval for running and/or delivering the report, a file type in which the report may be delivered, etc. For example, the system may be auto-scheduled to deliver the report at time intervals that may be, but are not limited to, daily (each morning), each weekday (each morning), weekly (each Monday), Monthly (first day of each month), quarterly (first day of each quarter), etc.

In embodiments, the means by which a report may be delivered may be chosen by the user when a user initially sets up report generation and/or scheduling of the report. The means by which the report may be delivered may also be preset for a given user. The means by which the system delivers the report may be, but are not limited to, via e-mail, text message, phone call, etc. In embodiments, the file type in which the report may be generated and/or delivered may be preset for a given user. For example, the file types in which the report may be generated and/or delivered may be, but are not limited to, CSV, PDF, XLS, XLSX, MDB, or any other file type as would be known to a worker skilled in the art. In embodiments, the running/generation of a report may take place separately from the delivery of the report. The report once generated may be stored in the system and may be delivered by the system at a later time. In embodiments, the running/generation and delivery of the report may take place in conjunction. For example, the report may be run first and delivered instantly thereafter. Sometimes, the report generation and/or delivery of the report may be just once as opposed to recurring.

In embodiments, the auto-scheduling feature may also have a job management aspect intertwined within for the user to manage the reports that may be scheduled. The number of reports that may be displayed (per page) to the user for his/her management may be 10, 20 or any number as desired by the user or the administrator of the system.

In embodiments, a Microsoft excel plug-in is developed for users who work with Microsoft Excel. The plug-in may be downloaded and installed by a user on his/her system. Upon doing so, the user may be able to download pertinent data or information from the system of the present disclosure using the plug-in. The plug-in may enable the user to directly connect and download data or information from the system into his/her spreadsheet and thus, allowing the user to easily manipulate the downloaded data or information as per the user's desire. The plug-in developed to work in conjunction with the system of the present disclosure may not be restricted to use only with Microsoft Excel, but rather may be used with any user application that would be capable of manipulating data that may be retrieved from the system of the present disclosure. In embodiments, a single plug-in may be developed to be compatible with any user application, across any platform, which may be used for manipulating data or information downloaded from the system of the present disclosure. In embodiments, a single plug-in may be developed to be compatible with any user application, within a particular platform, which may be used for manipulating data or information downloaded from the system of the present disclosure. In embodiments, the plug-in may communicate with the various components of the systems and methods of the present disclosure.

### Exemplary Use Cases

The following use cases are intended to facilitate an understanding of some of the capabilities of certain embodiments of the instantly disclosed subject matter. They are not intended to be limiting in any manner or aspect.

### Use Case 1: Travel Agency

A Business Traveller is at Newark airport attempting to fly to Miami. Newark airport is closed due to heavy thunderstorms. The traveller calls his travel agent who made the booking to look for an alternative. The agent who answers the call accesses the Data Services Component via the Data Access Component and enters the travellers' original routing in a tool made available in the Data Access Component. The tool displays a range of alternative routings to get from La Guardia to Miami which may include surface transportation options. Live flight status information is used to highlight which of the alternative routings are viable options (e.g. Red, Amber, Green). The agent has the option to filter the alternate options by airline/alliance/airport and by arrival time/journey time, or by other predetermined accommodation requirement (e.g. fare rules, service class, plane type, direct/indirect, etc.). The agent will then use the list of alternatives to recommend one or more options to the customer. The agent will then use their own reservation system to re-book the customers flights. If surface transport is required the agent may book this through the system. The passenger ends up getting the bus into New York, catching a train from New York to Philadelphia and re-booking on a flight from Philadelphia to Miami. The passenger arrives 8 hours late but on the planned day of travel. In some embodiments, the agent will be able to check flight availability via the tool as opposed to having to link to their own systems to access this information. The tool may be integrated with the agents' booking systems which will offer a seamless process for retrieving the customers booking, reviewing alternates and making the necessary changes.

### Use Case 2: Airport

London Heathrow airport is shut due to heavy snowfall. London Gatwick airport is still operating with reduced frequency of departures. London Luton and London Stansted airports are operating normally. Passengers arriving at Heathrow airport are struggling to source information on whether their flights are planned to operate and to secure an alternative booking. There are long queues at all airline ticket desks. It is reported that it is taking over an hour to get through to an agent at large airline call centres. Airline websites have some information but are not updated in real-time. Heathrow airport has purchased access to the system of the instantly disclosed subject matter. They post a link on their web page for access the tool via the web page, or alternatively via check-in kiosks located in airports, which allow the passengers to directly access the Data Access Component and thus the tool. Passengers access the tool and enter their original routing. The tool displays a range of alternative routings from airports which are still operating. The alternatives may include driving directions/public transport options to get to another airport. Live Flight status information is used to highlight which of the alternative routings are viable options (e.g. Red, Amber, Green). The passenger has the option to filter the alternate options by airline/alliance/airport, by arrival time/journey time, or by other predetermined accommodation requirement (e.g. fare rules, service class, plane type, direct/indirect, etc.). The passenger decides whether they want to pursue one of the alternatives or wait until Heathrow re-opens and they can be booked on the next available flight. If the passenger wishes to re-book they can access sponsored links via the disruption manager tool. The airport and/or the proprietor of the system may receive commission/revenue share from each booking made in this manner. In some embodiments, passengers will be able to check flight availability via the disruption manager tool before making a booking.

### Use Case 3: Consumer

A volcano has erupted in Iceland and the ash cloud is impacting all flights operating between the US and the UK. A passenger is in Atlanta on business and needs to get home for his daughter's birthday. The passenger downloads an application on to his phone permitting the phone to operate as a Data Access Component. The application identifies which airports are open and which airlines are operating. The passenger enters his planned routing. The tool displays a range of alternative routings from airports which are still operating. The alternatives may include driving directions/public transport options to get to another airport. Live Flight status information is used to highlight which of the alternative routings are viable options (e.g. Red, Amber, Green). The passenger has the option to filter the alternate options by airline/alliance/airport, by arrival time/journey time, or by other predetermined accommodation requirement (e.g. fare rules, service class, plane type, direct/indirect, etc.). The passenger decided whether they want to pursue one of the alternate options (i.e. itineraries) or wait until the ash cloud clears and their airline re-books them. If the passenger wishes to re-book they can access sponsored links via the disruption manager tool. The system proprietor may receive commission from each booking made in this manner and/or a direct fee from the traveller for facilitating ease of booking a viable alternate itinerary. Passengers will be able to check flight availability via the disruption manager tool before making a booking.

### Use Case 4: Cargo Shipment

A shipping port has been shut down due inclement weather and shipment of perishable goods is sitting in a storage container on a dock in Montreal. A web-enabled data access portal made available to the manufacturer of the perishable goods is automatically notified of the disruption. A number of alternate itineraries, including storage facilities within trucking distance that can maintain the perishable goods at an appropriate temperature to prevent perishing, are made available via the Data Access Component. The manufacturer can select the most appropriate alternate itinerary to ensure proper storage of the goods while, as examples, the port re-opens or they wait for other segments associated with the selected itinerary. A fee or commission is provided to the proprietor of the system by the manufacturer and/or the agent or organization who originally arranged for the shipment of the goods on behalf of the manufacturer. In some cases, the use of the system may be mandated by an insurance or similar company as a condition for insuring the goods being shipped, and the proprietor of the system may receive a flat fee in addition to any revenues or commissions associated with generation of alternate itineraries or the booking thereof.

### Use Case 5: Government Resource Management

During periods of disaster relief or other situation management during major catastrophes, Governments will need to know the location of stored aircrafts, for quick lease during major catastrophes, as well as other types of transportation and disaster relief material. Accordingly, the instantly disclosed subject matter may provide for an emergency management section built into the tool that allows shippers to post open space and/or available resources for government use during a disaster. In some embodiments, it may include a two-way communication tool (Data Access Component) that allows government users to upload data into the system showing when and where transportation modes or routes are unavailable (e.g. a road or bridge is rendered unusable, or an airport is shut-down) so that people and/or resources are not routed there. The system can also allow governments and government representatives to upload details on major infrastructure such as nuclear plants and dams and so forth that may be experiencing major disruption or risk of major disruption. The tool permits for adequate alternate itineraries for travel routes and residences for people, as well as for cargo and materiel during times of disaster relief where mass cargo and people must be moved into and out of disaster zone (i.e. an alternate itinerary for such cargo and/or people must be generated rapidly and in emergency conditions, in the face of high numbers of disruptions).

The examples and objectives described above are included solely to advance the understanding of the subject matter disclosed herein. Although the present disclosure has been described above by reference to certain embodiments and examples of the technology, the present disclosure is not limited to the embodiments and examples described above. Modifications and variations of the embodiments described above will occur to those skilled in the art in light of the above teachings and are included within the spirit and purview of this disclosure and are considered within the scope of the appended claims.

## Claims

1. A system for generating one or more alternate itineraries for an entity for accommodation, the system comprising:
a) a data storage component configured to store information, said information relating to: one or more segments, one or more disruptions, one or more accommodation requirements, one or more predetermined itineraries, said one or more alternate itineraries, or any combination thereof; and
b) a data services component in operative communication with said data storage component, said data services component configured to receive or transmit said information and process said information to generate said one or more alternate itineraries if the one or more disruptions affect the one or more segments of the one or more predetermined itineraries.

2. The system of claim 1, wherein the data services component assesses and identifies the one or more segments that the one or more disruptions affect.

3. The system of claim 1, wherein the one or more disruptions comprise: unavailability of the one or more segments in the one or more predetermined itineraries, an increase in risk of unavailability of the one or more segments in the one or more predetermined itineraries, a reduced desirability of the one or more segments in the one or more predetermined itineraries, an increased probability of the reduced desirability of the one or more segments in the one or more predetermined itineraries, a reduced availability of the one or more accommodation requirements in the one or more segments in the one or more predetermined itineraries, an increased probability of unavailability of the one or more accommodation requirements in the one or more segments in the one or more predetermined itineraries, an increased desirability of the one or more segments that is not in the one or more predetermined itineraries, an increased probability of the increased desirability of the one or more segments not in the one or more predetermined itineraries, an increased availability of the one or more accommodation requirements not in the one or more segments in the one or more predetermined itineraries, or an increased probability of availability of the one or more accommodation requirements in the one or more segments not in the one or more predetermined itineraries, or any combination thereof.

4. The system of claim 1, wherein the one or more accommodation requirements for the entity for accommodation are obtained by prediction, the prediction is based on: the one or more accommodation requirements of other entities for accommodation that share similar itineraries, data associated with a user associated with the entity for accommodation, the one or more segments, one or more social connections, one or more users, one or more origins, one or more connections, or one or more destinations, or any combination thereof.

5. The system of claim 1, wherein the data services component is further configured to:
continuously assess and identify the one or more segments that the one or more disruptions affect, continuously generate the one or more alternate itineraries, continuously predict the one or more accommodation requirements, or any combination thereof.

6. The system of claim 1, wherein the system further comprises a data access component in operative communication with the system, the data access component configured to facilitate access to one or both of the data storage component and the data services component.

7. The system of claim 1, wherein the data services component is further configured to access a booking resource to book all of the one or more segments of the one or more alternate itineraries.

8. The system of claim 1, wherein the data services component is further configured to ensure that each of the one or more segments achieves an associated predetermined accommodation requirement.

9. A method of generating one or more alternate itineraries for an entity for accommodation, the method comprising the steps of:
a) receiving information, said information relating to: one or more segments, one or more disruptions, one or more accommodation requirements, one or more predetermined itineraries, said one or more alternate itineraries, or any combination thereof;
b) storing said information in a data storage component; and
c) generating said one or more alternate itineraries if the one or more disruptions affect the one or more segments of the one or more predetermined itineraries.

10. The method of claim 9, wherein the method further comprises the step of transmitting said information.

11. The method of claim 9, wherein the step of generating the one or more alternate itineraries is triggered after assessing and identifying the one or more segments that the one or more disruptions affect.

12. The method of claim 9, wherein the one or more disruptions comprise: unavailability of the one or more segments in the one or more predetermined itineraries, an increased probability of unavailability of the one or more segments in the one or more predetermined itineraries, a reduced desirability of the one or more segments in the one or more predetermined itineraries, an increased probability of the reduced desirability of the one or more segments in the one or more predetermined itineraries, a reduced availability of the one or more accommodation requirements in the one or more segments in the one or more predetermined itineraries, an increased probability of unavailability of the one or more accommodation requirements in the one or more segments in the one or more predetermined itineraries, an increased desirability of the one or more segments that are not in the one or more predetermined itineraries, an increased probability of the increased desirability of the one or more segments not in the one or more predetermined itineraries, an increased availability of the one or more accommodation requirements not in the one or more segments in the one or more predetermined itineraries, or an increased probability of availability of the one or more accommodation requirements in the one or more segments not in the one or more predetermined itineraries, or any combination thereof.

13. The method of claim 9, wherein the one or more accommodation requirements for the entity for accommodation are obtained by prediction, the prediction is based on: the one or more accommodation requirements of other entities for accommodation that share any similar itineraries, data associated with a user associated with the entity for accommodation, the one or more segments, one or more social connections, one or more users, one or more origins, one or more connections, or one or more destinations, or any combination thereof.

14. The method of claim 9, wherein the method further comprises the steps of: continuously assessing and identifying the one or more segments that the one or more disruptions affect, continuously generating the one or more alternate itineraries, continuously predicting the one or more accommodation requirements, or any combination thereof.

15. The method of claim 9, wherein the method further comprises the step of accessing a booking resource to book the one or more segments of the alternate itineraries.

16. The method of claim 9, wherein the method further comprises the step of ensuring that each of the one or more segments achieves an associated predetermined accommodation requirement.

17. The method of claim 9, wherein said information further comprises a fee information, said fee information is associated with a user and said fee information comprises: a fee associated with generating the one or more alternate itineraries, a fee associated with booking the one or more alternate itineraries, a fee associated with accessing a data services component, a fee associated with accessing a data storage component, or a fee associated with accessing a data access component, or any combination thereof.

18. A computer program product for generating one or more alternate itineraries for an entity for accommodation, the computer program product comprising code which, when loaded into memory and executed on one or more processors, is adapted to perform the steps of:
a) receiving information, said information relating to: one or more segments, one or more disruptions, one or more accommodation requirements, one or more predetermined itineraries, said one or more alternate itineraries, or any combination thereof;
b) storing said information in a data storage component; and
c) generating said one or more alternate itineraries if the one or more disruptions affect the one or more segments of the one or more predetermined itineraries.

19. The computer program product of claim 18, wherein the computer program product is further adapted to perform the step of transmitting the information.

20. The computer program product of claim 18, wherein the computer program product is further adapted to perform the steps of: continuously assessing and identifying the one or more segments that the one or more disruptions affect, continuously generating the one or more alternate itineraries, continuously predicting the one or more accommodation requirements, or any combination thereof.
